# EUROPEAN PATENT APPLICATION

(11) **EP 4 307 085 A1**
(43) Date of publication of application: **17.01.2024**
(21) Application number: 23178180.8
(22) Date of filing: 08.06.2023
(51) Int. Cl.: G06F 1/18, H05K 5/00, H05K 5/02, H05K 5/03, G06F 1/16

(54) **QUICK-RELEASE COVER STRUCTURE**

(30) Priority: 14.07.2022 TW 111126548
(71) Applicant: Pegatron Corporation, Taipei City (TW)
(72) Inventor: LIN, Chuan-Yuan, Taipei (TW); WANG, Hui-Chen, Taipei (TW); KUO, Chan-Wei, Taipei (TW); LAI, Yu-Peng, Taipei (TW)
(74) Representative: Viering, Jentschura & Partner mbB Patent- und Rechtsanwälte

(57) **Abstract**

A quick-release cover structure includes a casing (10) and a cover (20). The casing (10) includes a through slot (11), a protrusion (11) and an engagement hole (13). The protrusion (11) protrudes from a first slot wall (111) of the through slot (11). The engagement hole (13) is arranged on a second slot wall (112) of the through slot (11). The cover (20) is assembled to cover the through slot (11), and includes a plate (21), an engagement member (22), an elastic hook (23) and a handle (24). The engagement member (22) and the elastic hook (23) respectively protrudes from the plate (21) and are adjacent to different side edges, the protrusion (12) is adapted to extend through the engagement member (22), and the elastic hook (23) is adapted to be engaged with the engagement hole (13). When the handle (24) is moved away from the through slot (11) by an acting force (F), the elastic hook (23) is deformed and disengaged from the engagement hole (13), so that the cover (20) is separated from the casing (10).

## Description

### BACKGROUND

### Technical Field

The present disclosure relates to a quick-release cover, and in particular, to a quick-release cover that can be disassembled and assembled without using a tool.

A back cover of a casing of a tablet computer or a notebook computer needs to be designed as detachable for assembly, update, upgrade, or maintenance. In order to further prevent the tablet computer or the notebook computer from falling off during the movement, the tablet computer or the notebook computer is often designed to be assembled and fixed with a plurality of screws. However, tools such as screwdrivers are required for disassembly and assembly, and small screws used are also prone to loss or damage during the disassembly and assembly. In addition, the tablet computer or the notebook computer used in a medical place needs to be cleaned frequently, and more screws cause the cleaning to be more difficult.

Moreover, some tablet computers or notebook computers are designed with a switch button structure, but the structure is often more complex and requires additional mechanical parts to be formed and assembled to complete the switch button structure.

### SUMMARY

In view of the above, the present disclosure provides a quick-release cover structure in an embodiment, including a casing and a cover. The casing includes a through slot, a protrusion, and an engagement hole. The through slot has a first slot wall and a second slot wall located on opposite sides. The protrusion protrudes from the first slot wall. The engagement hole is arranged on a side of the second slot wall. The cover is adapted to be assembled to the casing to cover the through slot, and the cover includes a plate, an engagement member, an elastic hook, and a handle. The plate includes a first side edge and a second side edge opposite to each other. When the cover covers the through slot, the first side edge contacts the first slot wall, and the second side edge contacts the second slot wall. The engagement member protrudes from the plate and is adjacent to the first side edge, and the protrusion is adapted to extend through the engagement member. The elastic hook protrudes from the plate and is adjacent to the second side edge, and the elastic hook is adapted to be engaged with the engagement hole. The handle extends from the second side edge of the plate. When the handle is moved away from the through slot by an acting force, the elastic hook is deformed and disengaged from the engagement hole, so that the cover is separated from the casing.

In this way, during assembling of the quick-release cover structure of the present disclosure, it is only necessary to cover the through slot with the corresponding cover, so that the cover is then rotated to be closed until the protrusion passes through the engagement member and the hook is engaged with the engagement hole after the engagement member is aligned to the protrusion, so as to complete the assembly of the cover. When the cover is to be disassembled for replacement or maintenance of the internal component, the elastic hook can deform elastically and disengage from the engagement hole only by applying an acting force to the handle away from the through slot (not perpendicular to the surface of the plate). In this case, the cover can be removed through rotation. In this way, the assembly and disassembly of the cover can be completed without using an additional tool. In addition, no excessive components are used in the process, and all fastening structures are accommodated on an inner side of the casing without being exposed, which can also reduce the component that may be contaminated or need cleaning.

### BRIEF DESCRIPTION OF THE DRAWINGS

FIG. 1 is a schematic diagram of a quick-release cover structure according to an embodiment of the present disclosure.
FIG. 2 is a schematic exploded view a quick-release cover structure according to an embodiment of the present disclosure.
FIG. 3 is a schematic diagram showing an operation that a cover is to be closed to a casing according to an embodiment of the present disclosure.
FIG. 4 is a cross-sectional view taken along line BB in FIG. 3 according to the present disclosure.
FIG. 5 is a cross-sectional view taken along line AA in FIG. 1 according to the present disclosure.
FIG. 6 is a schematic diagram showing an operation that a cover is to be disengaged from a casing according to an embodiment of the present disclosure.

### DETAILED DESCRIPTION

Embodiments are provided below for detailed description. However, the embodiments are merely used as examples for illustration, and do not limit the protection scope of the present disclosure. In addition, some elements are omitted in the drawings in the embodiments to clearly show the technical features of the present disclosure. The same reference numerals are used to indicate the same or similar elements in all of the drawings.

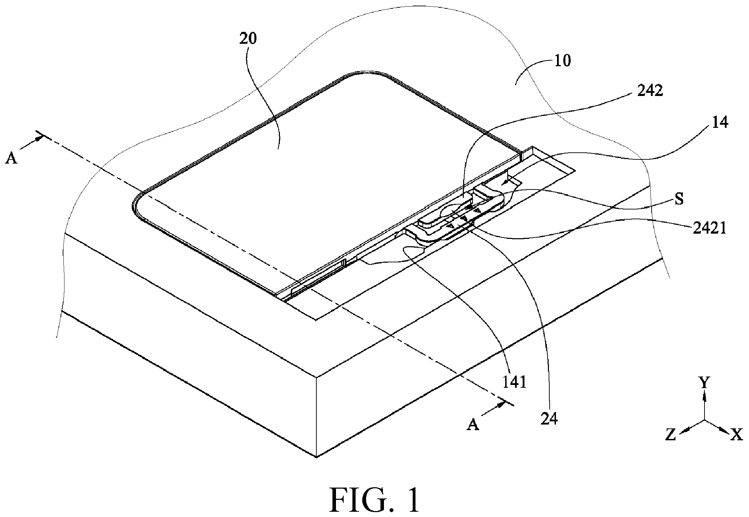

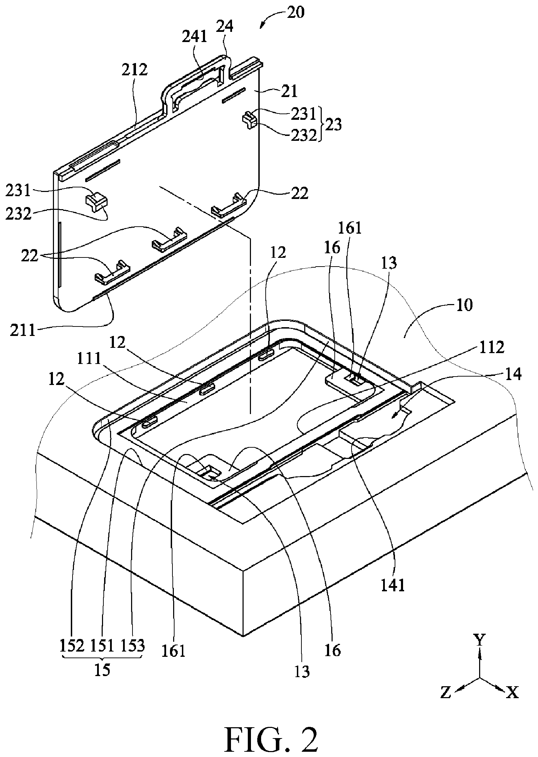

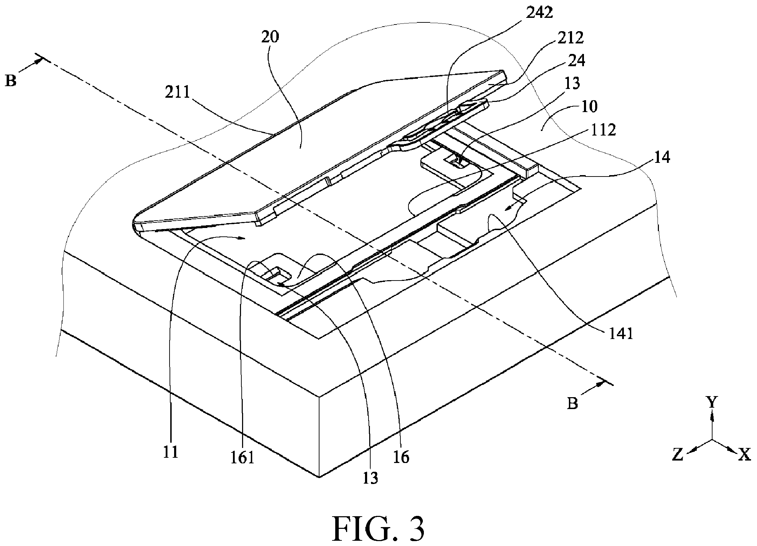

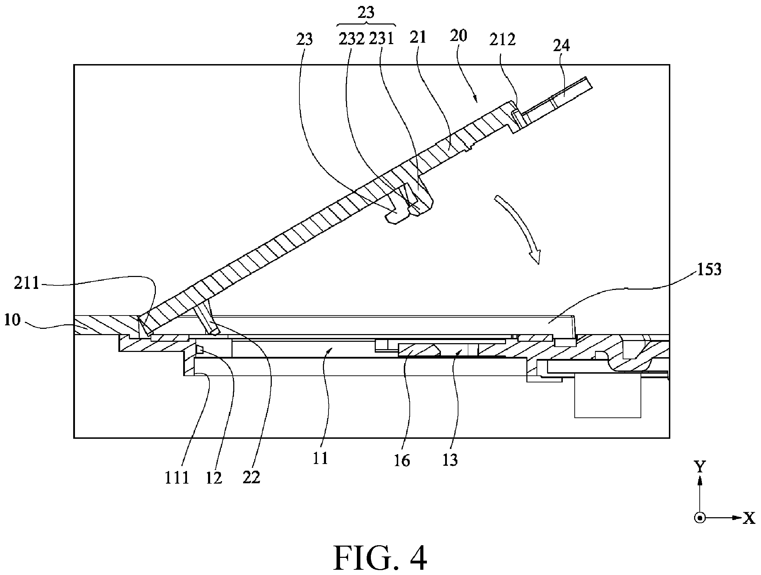

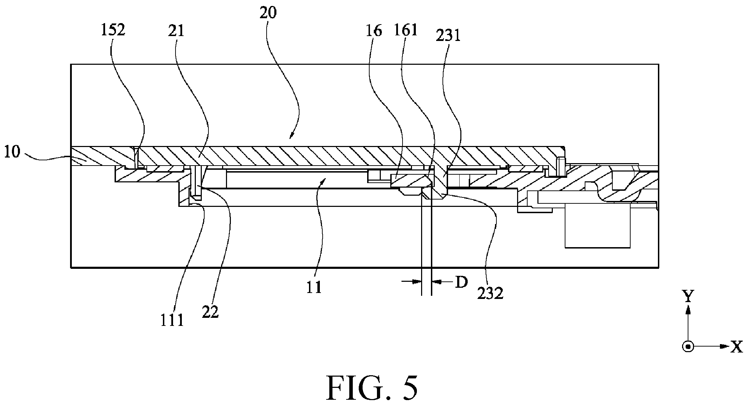

FIG. 1 is a schematic diagram of a quick-release cover structure according to an embodiment of the present disclosure. FIG. 2 is a schematic exploded view a quick-release cover structure according to an embodiment of the present disclosure. FIG. 3 is a schematic diagram showing an operation that a cover is to be closed to a casing according to an embodiment of the present disclosure. FIG. 4 is a cross-sectional view taken along line BB in FIG. 3 according to the present disclosure. FIG. 5 is a cross-sectional view taken along line AA in FIG. 1 according to the present disclosure.

It may be seen from FIG. 1 and FIG. 2 that the quick-release cover structure in this embodiment includes a casing 10 and a cover 20. For ease of description, in this embodiment, the quick-release cover structure is shown in FIG. 1 from a perspective view. A front-rear direction in a direction parallel to a surface of the cover 20 is defined as a first direction X, a left-right direction is defined as a third direction Z, and an up-down direction perpendicular to the surface of the cover 20 is defined as a second direction Y The first direction X, the second direction Y, and the third direction Z are perpendicular to each other.

The casing 10 includes a through slot 11, a protrusion 12, and an engagement hole 13. The through slot 11 has a first slot wall 111 and a second slot wall 112 located on opposite sides in the first direction X. The protrusion 12 protrudes from the first slot wall 111 along the first direction X. It can be seen from FIG. 2 that in this embodiment, three protrusions 12 are arranged at equal intervals at the first slot wall 111 by way of example. However, the number of protrusions and a position between the protrusions are not limited thereto. Alternatively, only one protrusion 12 may be arranged, or the number of protrusions may be increased or decreased depending on a size of the through slot 11. The engagement hole 13 is arranged on a side of the second slot wall 112. In this embodiment, the engagement hole 13 is arranged on each of left and right sides of the second slot wall 112 by way of example. However, only one or more engagement holes may be provided, and the engagement hole may be provided at any position on the side of the second slot wall 112.

The cover 20 is adapted to be assembled to the casing 10 to cover the through slot 11. The cover 20 includes a plate 21, an engagement member 22, an elastic hook 23, and a handle 24. The plate 21 includes a first side edge 211 and a second side edge 212 on opposite sides in the first direction X. When the cover 20 covers the through slot 11, the first side edge 211 contacts the first slot wall 111, and the second side edge 212 contacts the second slot wall 112. When the cover 20 covers the through slot 11, the engagement member 22 protrudes from the plate 21 in a negative direction of the second direction Y and is adjacent to the first side edge 211, and the protrusion 12 is adapted to extend through the engagement member 22. It can be seen from FIG. 2 that the engagement member 22 is arranged on a lower surface of the plate 21 and adjacent to the first side edge 211. In FIG. 2, in order to clearly show a structure of the lower surface of the plate 21, the plate 21 is rotated by 90 degrees to show that a protruding direction of the engagement member 22 does not extend along the second direction Y. However, it can be seen from FIG. 5 that when the cover 20 is assembled to the casing 10, the engagement member 22 protrudes downward from the lower surface of the plate 21 in the second direction Y.

It can be seen from FIG. 1 to FIG. 5 that when the cover 20 is assembled to the casing 10, the protrusion 12 correspondingly extends through a through hole in the middle of the engagement member 22. Therefore, the displacement of the cover 20 in the second direction Y is to be limited by the engagement member 22 and the protrusion 12, and the cover 20 cannot be directly disengaged from the casing 10 in the second direction Y. In this way, when a user uses a tablet computer or a notebook computer, even if the cover 20 is located under the tablet computer or the notebook computer and used facing downward, the cover is not easily disengaged from the casing 10 during use.

Further referring to FIG. 2 and FIG. 5, the elastic hook 23 protrudes from the plate 21 and is adjacent to the second side edge 212, and the elastic hook 23 is adapted to be engaged with the engagement hole 13. The handle 24 extends and is arranged on the second side edge 212 of the plate 21 in the first direction X. It can be seen from FIG. 3 and FIG. 4 that when the cover 20 is to be assembled to the casing 10 to cover the through slot 11, the first side edge 211 of the plate 21 is used as a pivot to abut against the casing 10, the engagement member 22 corresponds to a position of the protrusion 12, and then the cover 20 is rotated to cover the casing 10. Once the cover 20 covers the casing 10, as shown in FIG. 5, the elastic hook 23 correspondingly extends through and is engaged with the engagement hole 13.

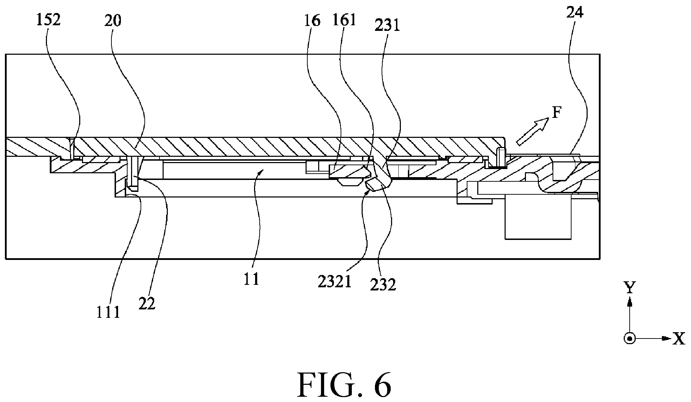

Next, referring to FIG. 6, FIG. 6 is a schematic diagram showing an operation that a cover is to be disengaged from a casing according to an embodiment of the present disclosure. As shown in FIG. 6, when a handle 24 is moved away from the through slot 11 by an acting force F, the elastic hook 23 is deformed and disengaged from the engagement hole 13, so that the cover 20 is separated from the casing 10.

In this way, during assembling of the quick-release cover structure of this embodiment, it is only necessary to correspondingly arrange the cover 20 on the through slot 11, so that the cover is then rotated to be closed until the elastic hook 23 is engaged with the engagement hole 13 after the engagement member 22 is aligned to the protrusion 12, so as to complete the assembly of the cover 20. In this way, the assembly of the cover 20 can be completed without using an additional tool. In addition, no excessive components are used in the process, and all fastening structures are accommodated on an inner side of the casing 10 without being exposed, which can also reduce the component that may be contaminated or need cleaning. When the cover 20 is to be disassembled for replacement or maintenance of the internal component, the elastic hook 23 can deform elastically and disengage from the engagement hole 13 only by applying an acting force F to the handle 24 away from the through slot 11, and then the cover 20 can be removed by rotating the cover 20. Therefore, quick disassembly of the cover 20 can also be completed without using an additional tool.

Still referring to FIG. 2 and FIG. 5, the elastic hook 23 includes an extension portion 231 and a hook portion 232. The extension portion 231 is arranged on the plate 21 and extends in a direction perpendicular to the surface of the plate 21 (that is, the negative direction of the second direction Y). The hook portion 232 is connected to the extension portion 231 and corresponds to the engagement hole 13. It can be seen from FIG. 5 that the hook portion 232 is engaged with the engagement hole 13 in the negative direction of the first direction X. As shown in FIG. 6, after the acting force F is applied to the handle 24 away from the through slot 11, the hook portion 232 of the elastic hook 23 can be disengaged from the engagement hole 13 through an elastic deformation of the extension portion 231.

Referring to FIG. 2 and FIG. 6 together, an included angle between the direction of the acting force F and the extending direction of the handle 24 (that is, the second direction Y) is less than 90 degrees. In addition, it can be seen from FIG. 6 that an included angle between the acting force F and the first direction X is also less than 90 degrees. That is to say, if the cover 20 is to be disengaged from the casing, an acting force F not parallel to the second direction Y or the first direction X needs to be applied to the handle 24, so that the hook portion 232 of the elastic hook 23 can be disengaged from the engagement hole 13 through an elastic deformation of the extension portion 231.

Moreover, it can be seen from FIG. 5 that when the hook portion 232 is engaged with the engagement hole 13, the hook portion 232 and the engagement hole 13 overlap each other by an engagement section. A length D of the engagement section in the first direction X is less than 1 millimeter, and preferably 0.8 millimeters. In this way, when the cover 20 is covered on the casing 10, the required engagement force may be provided between the hook portion 232 and the engagement hole 13 through the engagement section. The hook portion 232 can also be disengaged from the engagement hole 13 by applying an acting force F that will not damage the handle 24 and is easy to apply.

It can be seen from FIG. 1 and FIG. 2 that the casing 10 further includes an accommodating groove 14. The handle 24 is accommodated in the accommodating groove 14, and an end of the handle 24 away from the plate 21 abuts against a groove wall 141 of the accommodating groove 14. The abutment herein may mean that an end of the handle 24 is tightly fitted to the groove wall 141, or mean that the end of the handle 24 is very close to but not yet in contact with the groove wall 141. When the handle 24 is accommodated in the accommodating groove 14, an outer surface of the casing 10 may be flatter without any protruding components. The handle 24 may also be prevented from being damaged by impact when placed on a desk or carried around. In addition, the user may also provide stop in the first direction X when operating the handle 24 through limit and stop of the slot wall 141, so as to prevent the handle 24 from being pulled in a wrong direction with an excessive force, resulting in a possibility of fracture of the hook 23.

It can be seen from FIG. 2 that the handle 24 is annular, and an operating portion 241 is recessed on an annulus inner side of the handle 24 and facing the casing 10. A minimum thickness of the handle 24 is defined at the operating portion 241. The operating portion 241 is a recessed structure, so that the handle 24 has a relatively thin structure on an inner side surface of the annulus, thereby increasing a distance of the handle 24 between the operating portion 241 and the accommodating groove 14, and providing the user with larger space to hook the handle 24 by using a fingertip or a nail.

In addition, it may be seen from FIG. 1 and FIG. 2 that the cover 20 further includes a limiting member 242 arranged on the second side edge 212 of the plate 21 and located within the annulus of the handle 24. By arranging the limiting member 242, a gap S between the end of the handle 24 and the plate 21 may be reduced in the annular space formed between the handle 24 and the plate 21. In this way, the acting force that the finger can apply to the handle 24 is controlled by limiting a size of a fingertip of the user that can extend through the annular space of the handle 24. In other words, since only a small part of the fingernail or fingertip of the finger can extend through the gap S, the acting force F that may be applied to the handle 24 is also limited accordingly, so as to prevent the handle 24 from breaking due to the excessive force.

Furthermore, as shown in FIG. 1, the limiting member 242 includes an arc-shaped recess 2421 arranged away from the second side edge 212 and the casing 10. The arc-shaped recess 2421 is in an arc shape similar to a fingertip, which allows the fingertip of the user to abut against the arc-shaped recess. Alternatively, a nail hooked into the gap S can be guided to slide into the operating portion 241 below the handle 24 along the arc, so as to apply the acting force F to the handle 24.

The casing 10 further includes a limiting structure 15 arranged around the through slot 11, and a shape of the limiting structure 15 corresponds to that of the plate 21. It can be seen from FIG. 2 that the limiting structure 15 may be formed by partition walls 151, 152, and 153 surrounding the through slot 11. Actually, the limiting structure 15 may be formed by recessing the casing 10, and then the through slot 11 is formed at a middle position surrounded by the limiting structure 15. Alternatively, the limiting structure 15 protrudes outward from an outer surface of the casing 10 to surround the through slot 11. Through the limit of the partition walls 151, 152, and 153, the assembly of the cover 20 can be positioned during assembly. A size of the space surrounded by the partition walls 151, 152, and 153 corresponds to the shape of the plate 21, so as to provide the limit in the first direction X and the third direction Z.

In addition, it can be seen from FIG. 6 that the hook portion 232 has an inclined surface 2321 at a position facing the engagement hole 13. As shown in FIG. 4, when the cover 20 is assembled to the casing 10, the inclined surface 2321 of the hook portion 232 abuts against a wall surface around the engagement hole 13 and pushes against the extension portion 231 to deform, so that the hook portion 232 can extend through the engagement hole 13. Moreover, as shown in FIG. 2, the casing 10 further includes an abutment member 16 extending from the second slot wall 112 in the negative extension of the first direction X. The engagement hole 13 extends through the abutment member 16, and the abutment member 16 has a docking surface 161 on the periphery of the engagement hole 13 away from the second slot wall 112. In this way, the inclined surface 2321 may abut against and guide the docking surface 161 with each other, so that the hook portion 232 extends through the engagement hole 13 more easily.

Based on the above, in the quick-release cover structure of the present disclosure, the assembly and disassembly of the cover 20 can also be completed without using an additional tool. In addition, no excessive components are used in the process, and all fastening structures are accommodated on an inner side of the casing 10 without being exposed, which can also reduce the component that may be contaminated or need cleaning.

## Claims

1. A quick-release cover structure, comprising:
a casing (10), comprising:
a through slot (11), having a first slot wall (111) and a second slot wall (112) located on opposite sides;
a protrusion (12), protruding from the first slot wall (111); and
an engagement hole (13), arranged on a side of the second slot wall (112); and
a cover (20), adapted to be assembled to the casing (10) to cover the through slot (11) and comprising:
a plate (21), having a first side edge (211) and a second side edge (212) opposite to each other, wherein when the cover covers the through slot (11), the first side edge (211) contacts the first slot wall (111), and the second side edge (212) contacts the second slot wall (112);
an engagement member (22), protruding from the plate (21) and adjacent to the first side edge (211), wherein the protrusion (12) is adapted to extend through the engagement member (22);
an elastic hook (23), protruding from the plate (21) and adjacent to the second side edge (212), wherein the elastic hook (23) is adapted to be engaged with the engagement hole (13); and
a handle (24), extending from the second side edge (212) of the plate (21), wherein when the handle (24) is moved away from the through slot (11) by an acting force (F), the elastic hook (23) is deformed and disengaged from the engagement hole (13), so that the cover (20) is separated from the casing (10).

2. The quick-release cover structure according to claim 1, wherein the elastic hook (23) comprises an extension portion (231) and a hook portion (232), the extension portion (231) is arranged on the plate (21) and extends in a direction perpendicular to a surface of the plate (21), and the hook portion (232) is connected to the extension portion (231) and is adapted to be engaged with the engagement hole (13).

3. The quick-release cover structure according to claim 2, wherein when the hook portion (232) is engaged with the engagement hole (13), the hook portion (232) and the engagement hole (13) overlap each other by an engagement section, and a length (D) of the engagement section is less than 1 millimeter.

4. The quick-release cover structure according to any one of claims 2 to 3, wherein the hook portion (232) has an inclined surface facing the engagement hole (13).

5. The quick-release cover structure according to claim 4, wherein the casing (10) further comprises an abutment member (16) extending from the second slot wall (112), the engagement hole (13) extends through the abutment member (16), and the abutment member (16) has a docking surface (161) at the engagement hole (13) away from the second slot wall (112).

6. The quick-release cover structure according to any one of claims 1 to 5, wherein an included angle between a direction of the acting force (F) and an extending direction of the handle (24) is less than 90 degrees.

7. The quick-release cover structure according to any one of claims 1 to 6, wherein the casing (10) further comprises an accommodating groove (14), the handle (24) is accommodated in the accommodating groove (14), and an end of the handle (24) away from the plate (21) abuts against a groove wall (141) of the accommodating groove (14).

8. The quick-release cover structure according to any one of claims 1 to 7, wherein the handle (24) is annular, an operating portion (241) is recessed on an annulus inner side of the handle (24) and facing the casing (10), and a minimum thickness of the handle (14) is defined at the operating portion (241).

9. The quick-release cover structure according to any one of claims 1 to 8, wherein the handle (24) is annular, and the cover (10) further comprises a limiting member (242) arranged on the second side edge (212) of the plate (21) and located within the annulus of the handle (24).

10. The quick-release cover structure according to any one of claims 1 to 9, wherein the casing (10) further comprises a limiting structure (15) arranged around the through slot (11), and a shape of the limiting structure (15) corresponds to the plate (21).
